# EUROPEAN PATENT APPLICATION

(11) **EP 3 041 279 A1**
(43) Date of publication of application: **06.07.2016**
(21) Application number: 14761032.3
(22) Date of filing: 27.02.2014
(51) Int. Cl.: H04W 8/14

(54) **TERMINAL AND WIRELESS NETWORKING METHOD**

(30) Priority: 29.08.2013 CN 201310385206
(71) Applicant: ZTE Corporation, Shenzhen, Guangdong 518057 (CN)
(72) Inventor: WANG, Pengren, Shenzhen Guangdong 518057 (CN)
(74) Representative: Mozzi, Matteo
(86) International application number: PCT/CN2014/072642
(87) International publication number: WO 2014/135026

(57) **Abstract**

A terminal and a wireless networking method are provided to address the problem that terminal devices in the same network or terminal devices in different networks cannot communicate with each other, to facilitate use of terminals. The terminal includes a first acquisition component which is configured to acquire a broadcast data frame sent from another Group Owner (GO) terminal currently residing on a link supporting Wi-Fi Direct, the broadcast data frame carrying address information of said other GO terminal; a first analysis component which is configured to analyze the broadcast data frame to obtain the address information; a route update component which is configured to establish a route relationship with said other GO terminal according to the address information. The networking of devices belonging to different groups enables the intercommunication among a plurality of devices on different network segments as well as the communication between Group Client (GC) terminals in the same group, thus facilitating the use of terminals.

## Description

### Technical Field

The present disclosure relates to the field of communications and in particular to a terminal and a wireless networking method.

### Background

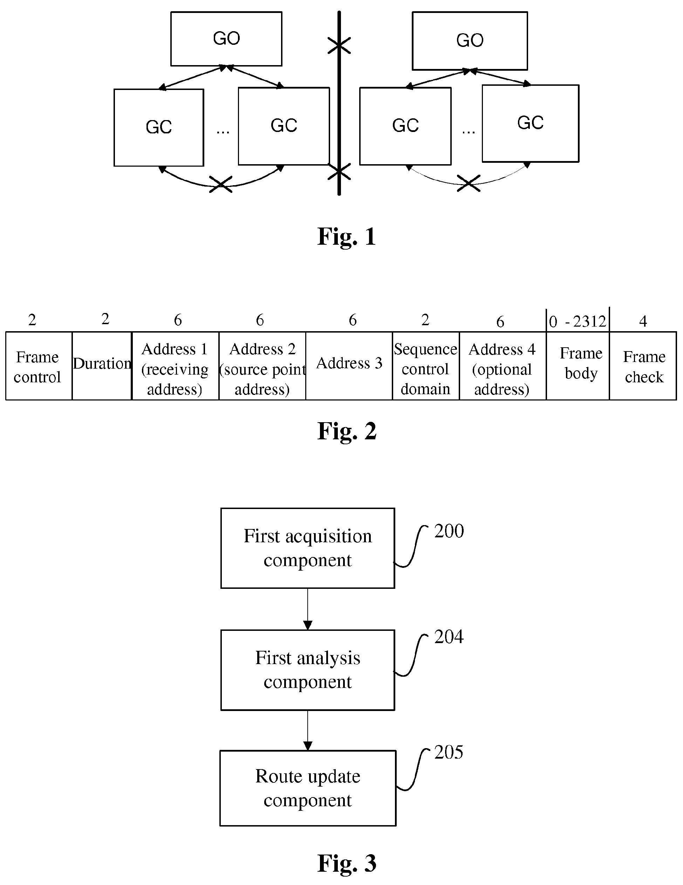

In Oct. 2010, the Wi-Fi Alliance published a Wi-Fi Direct white paper in which basic information of related technologies and the features and the functions of Wi-Fi Direct are introduced and in which it is explicated that the standard of Wi-Fi Direct allows devices in a wireless network to be interconnected without using a wireless router. With the use of a Wi-Fi Direct device discovery function and a Wi-Fi Direct service discovery function, a user can find available devices and services and then establish a connection. Meanwhile, the use of a Wi-Fi protection mechanism can simplify the procedure that a Wi-Fi Direct device establishes a secure connection with another device. Thus, a Wi-Fi device can have a connection at any place without using a Wi-Fi router or an access point. In a new network based on Wi-Fi Direct, there are two new roles, i.e., Group Owner (GO) terminal and Group Client (GC) terminal, to support P2P connection. As defined in the specification, a Group Owner is compatible to conventional Wi-Fi networks and is capable of serving as a station (STA) or an Access Point (AP) and establishing a secure peer-to-peer connection with a plurality of GC terminals. A Group Client is analogous to an STA but has other functions of establishing a P2P connection with a Group Owner than an STA. A terminal can serve as a Group Owner and a Group Client at the same time. Described more functionally straightforward, Wi-Fi Direct is a technology with the use of which a mobile terminal can be directly connected with other digital devices simply, quickly and securely, no matter whether there is a conventional AP deployed in or around the residence in which the mobile terminal exists. At present, in a network based on Wi-Fi Direct, data can only be exchanged between a GO terminal and GC terminals in the same group, as shown in Fig. 1, the GC terminals in the same group cannot communicate with each other, and the terminals in different groups cannot communicate with each other either.

In the related art, there are mainly three types of 802.11 frames. A data frame, serving as the packhorse for 802.11, takes charge of the data transmission between workstations. The data frame may be different in different network environments. A control frame which is typically used together with a data frame and is responsible for area clearing, channel acquisition and carrier monitoring maintenance as well as responding positively after receiving information so as to improve the reliability of the data transmission between workstations. A management frame is responsible for monitoring, it is mainly used for the joining in or exit from a wireless network and the connection transfer between base stations. Data of an upper-layer protocol are placed in a frame body of the data frame and transferred through the data frame. Fig. 2 shows the basic structure of a data frame.

### Summary

The embodiments of the present disclosure provide a terminal and a wireless networking method to address the problem that terminal devices in the same network or terminal devices in different networks cannot communicate with each other, so as to facilitate the use of terminals.

To address the foregoing technical problem, a terminal is provided in an embodiment of the present disclosure which includes:
a first acquisition component which is configured to acquire a broadcast data frame sent from another Group Owner (GO) terminal currently residing on a link supporting Wi-Fi Direct, wherein the broadcast data frame carries address information of said other GO terminal;
a first analysis component which is configured to analyze the broadcast data frame to obtain the address information of said other GO terminal; and
a route update component which is configured to establish a route relationship with said other GO terminal according to the address information of said other GO terminal.

In an exemplary embodiment, address information of a Group Client (GC) terminal in the same group as said other GO terminal may also be carried in the broadcast data frame;
the first analysis component may also be configured to obtain, from the broadcast data frame, the address information of the GC terminal in the same group as said other GO terminal; and
the route update component may also be configured to establish a route relationship with the GC terminal in the same group as said other GO terminal according to the address information of the GC terminal in the same group as said other GO terminal.

In an exemplary embodiment, the address information may include a Media Access Control (MAC) address and an Internet Protocol (IP) address.

In an exemplary embodiment, the route update component may be configured to modify, according to the IP address of said other GO terminal, a gateway address under a P2P0 interface to be the IP address of said other GO terminal, and establish the route relationship with said other GO terminal.

In an exemplary embodiment, the terminal may further include:
a network confirmation component which is configured to, after the route relationship with said other GO terminal has been established, carry out a ping processing for gateways of different network segments of a network, and update a connection/disconnection status of the network.

In an exemplary embodiment, the terminal may further include:
a record component which is configured to record an initialization phase of a dynamic host configuration protocol of the GO terminal to be an IP address assigned to a GC terminal in the same group as the GO terminal and an MAC address of the GC terminal;
a frame extension component which is configured to sequentially write the IP address and the MAC address of the GC terminal recorded by the record component into a data area of a frame body of the broadcast data frame and fill an address field of the broadcast data frame with the IP address and the MAC address of the GO terminal to obtain an extended broadcast data frame; and
a frame sending component which is configured to send the extended broadcast data frame.

In an exemplary embodiment, the IP address and the MAC address of the GC terminal are recorded in the extended broadcast data frame using 10 bytes, wherein the IP address occupies 4 bytes and the MAC address occupies 6 bytes.

A terminal is also provided in an embodiment of the present disclosure which includes:
a second acquisition component which is configured to acquire a broadcast data frame sent from a GO terminal currently residing on a link supporting Wi-Fi Direct, wherein the broadcast data frame carries address information of at least one other GC terminal in a same group as the GO terminal;
a second analysis component which is configured to analyze the broadcast data frame to obtain the address information of the at least one other GC terminal in the currently broadcasted group; and
a communication component which is configured to communicate with the at least one other GC terminal according to the recorded address information of the at least one other GC terminal.

In an exemplary embodiment, the address information includes an MAC address and an IP address.

A wireless networking method is also provided in an embodiment of the present disclosure which includes:
acquiring a broadcast data frame sent from another GO terminal currently residing on a link supporting Wi-Fi Direct, wherein the broadcast data frame carries address information of said other GO terminal;
analyzing the broadcast data frame to obtain the address information of said other GO terminal; and
establishing a route relationship with said other GO terminal according to the address information of said other GO terminal.

In an exemplary embodiment, address information of a GC terminal in a same group as said other GO terminal may also be carried in the broadcast data frame;
the address information of the GC terminal in the same group as said other GO terminal may be acquired from the broadcast data frame; and
a route relationship with the GC terminal in the same group as said other GO terminal may be established according to the address information of the GC terminal in the same group as said other GO terminal.

In an exemplary embodiment, the address information may include an MAC address and an IP address.

In an exemplary embodiment, establishing the route relationship with the GC terminal in the same group as said other GO terminal according to the address information of the GC terminal may include:
modifying, according to the IP address of said other GO terminal, a gateway address under a P2P0 interface to be the IP address of said other GO terminal and establishing the route relationship with said other GO terminal.

In an exemplary embodiment, the method may further include: carrying out a ping processing for gateways of different network segments of a network after the route relationship has been established, and updating a connection/disconnection status of the network.

A data frame construction method is also provided in an embodiment of the present disclosure which includes:
recording an initialization phase of a dynamic host configuration protocol of a GO terminal to be an IP address assigned to a GC terminal in the same group as the GO terminal and an MAC address of the GC terminal;
writing the IP address and the MAC address of the GC terminal recorded by a record component into a data area of a frame body of a broadcast data frame and filling an address field of the broadcast data frame with the IP address and the MAC address of the GO terminal to obtain an extended broadcast data frame; and
sending the extended broadcast data frame.

A communication method is also provided in an embodiment of the present disclosure which includes:
acquiring a broadcast data frame sent from a GO terminal currently residing on a link supporting Wi-Fi Direct, wherein the broadcast data frame carries address information of a GC terminal in a same group as the GO terminal;
analyzing the broadcast data frame to obtain an Internet Protocol (IP) address and a Media Access Control (MAC) address of at least one other Group Client (GC) terminal in a currently broadcasted group; and
communicating with the at least one other GC terminal according to the recorded address information of the at least one other GC terminal.

The embodiments of the present disclosure have beneficial effects which will be described in detail as follows.

In the terminal provided in one or more embodiments of the present disclosure, the first acquisition component acquires a data-type broadcast frame not belonging to this terminal, the first analysis component analyzes the frame to obtain the address information of another GO terminal sending the acquired broadcast frame, the route update component establishes a route with said other GO terminal according to the address information carried in the data frame and establishes a route relationship with a GC terminal in the same group as the GO terminal according to the MAC address and the IP address of the GC terminal. Thus, communication is achievable between different network segments through the established route, thus facilitating the use of terminals.

In the terminal provided in one or more embodiments of the present disclosure, the first analysis component analyzes the address of a GC terminal in the group of another GO terminal that is contained in an acquired broadcast data frame, and the route update component establishes a route relationship with the GC terminal in the same group as said other GO terminal according to the address information of the GC terminal in the same group as said other GO terminal, thus realizing the intercommunication between the GO terminal and the GC terminals which belong to different groups and consequentially facilitating the use of terminals.

In the terminal provided in one or more embodiments of the present disclosure, the network segment on which a GO terminal or a GC terminal exists can be known according to the IP address of the GO terminal or GC terminal, and the GO terminal or GC terminal can be uniquely identified by the MAC address of the GO terminal or the GC terminal, then each communicable terminal can be determined for communication.

In the terminal provided in one or more embodiments of the present disclosure, the route update component modifies an address of the network gateway to be the IP address of another GO terminal, thus facilitating the establishment of a route relationship using the information acquired.

In the terminal provided in one or more embodiments of the present disclosure, the network confirmation component carries out a ping processing for gateways of different network segments of a network at regular time after the establishment of a route relationship has been completed, and updates a connection/disconnection status of the network in time. By monitoring and updating a network in real time in this way, the workload of the network is reduced and the effectiveness of data synchronization is guaranteed.

In the terminal provided in one or more embodiments of the present disclosure, the frame extension component sequentially writes the IP address and the MAC address of each GC terminal recorded by the record component into a data area of a frame body and fills an address field of the broadcast data frame with the IP address and the MAC address of the GO terminal to obtain an extended broadcast data frame, and the frame sending component sends the extended broadcast data frame. This type of broadcast data frame can be sent to each host on the same physical network segment.

In the terminal provided in one or more embodiments of the present disclosure, the IP address and the MAC address of a GC terminal are recorded in a frame body so that the broadcast range of the frame is known, and when the terminal receives another broadcast data frame, the GC terminal to which this broadcast data frame belongs can be determined. In this way, the GC terminal to which a broadcast data frame belongs can be known, thus terminals in different areas can be better connected.

In the terminal provided in one or more embodiments of the present disclosure, as the second analysis component analyzes a broadcast data frame acquired by the second acquisition component, a GC terminal, belonging to the current group or not, records the address information of the other GC terminals in the currently broadcasted group, and information is exchanged between the GC terminals by means of the communication component, thus facilitating the communication between users.

In the terminal provided in one or more embodiments of the present disclosure, the address information of a GC terminal includes an IP address according to which the network segment on which the GC terminal exists is known and an MAC address according to which the GC terminal is uniquely identified, thus, the information of each GC terminal can be determined for the intercommunication among the GC terminals.

### Brief Description of the Drawings

Fig. 1 is a diagram illustrating the structure of a Wi-Fi Direct Network according to the related art;
Fig. 2 is a schematic diagram illustrating the structure of a data frame according to the related art;
Fig. 3 is a schematic diagram illustrating a part of components of a GO terminal according to an embodiment of the present disclosure;
Fig. 4 is a diagram illustrating the relationship between all the components of a GO terminal according to an embodiment of the present disclosure;
Fig. 5 is a flowchart illustrating a data record function according to an embodiment of the present disclosure;
Fig. 6 is a flowchart illustrating a frame analysis function according to an embodiment of the present disclosure;
Fig. 7 is a flowchart illustrating a route update function according to an embodiment of the present disclosure;
Fig. 8 is a flowchart illustrating a network confirmation function according to an embodiment of the present disclosure;
Fig. 9 is a schematic diagram illustrating a specific frame extension process according to an embodiment of the disclosure;
Fig. 10 is a schematic diagram illustrating the structure of a broadcast data frame; and
Fig. 11 is a schematic diagram illustrating the relationship between the components of a GC terminal according to an embodiment of the present disclosure.

### Detailed Description of the Embodiments

To set forth the technical problem to be addressed by the present disclosure and the technical solution and the advantages of the present disclosure more clearly, the present disclosure is described below in detail with reference to specific embodiments when taken in conjunction with accompanying drawings.

To address the problem that devices on different network segments cannot communicate with each other, a terminal is provided in an embodiment of the present disclosure to guarantee the smooth communication between devices on different network segments.

As shown in Fig. 3, in accordance with an embodiment of the present disclosure, a terminal includes:
a first acquisition component 200 which is configured to acquire a broadcast data frame sent from another GO terminal currently residing on a link supporting Wi-Fi Direct, wherein the broadcast data frame carries address information of said other GO terminal;
a first analysis component 204 which is configured to analyze the broadcast data frame to obtain the address information of said other GO terminal; and
a route update component 205 which is configured to establish a route relationship with said other GO terminal according to the address information of said other GO terminal.

In the foregoing embodiment, the first acquisition component 200 acquires a broadcast data frame sent from another GO terminal which resides on a link supporting Wi-Fi Direct, the first analysis component 204 analyzes the broadcast data frame sent from said other GO terminal and records the address information of a GC terminal in the currently broadcasted group, and the route update component 205 establishes a route to said other GO terminal according to the address information of said other GO terminal, thus completing wireless networking and consequentially realizing the communication between different network segments.

Preferably, in a terminal provided in another embodiment of the present disclosure, to realize the communication between different network segments on the basis of the embodiment shown in Fig. 3, the address information of a GC terminal in the group to which said other GO terminal belongs is also carried in a broadcast data frame.

The first analysis component 204 is also configured to acquire, from the broadcast data frame, the address information of the GC terminal in the same group as said other GO terminal.

The route update component 205 is also configured to establish a route relationship with the GC terminal in the same group as said other GO terminal according to the address information of the GC terminal in the same group as said other GO terminal.

In a case where the GO terminal receives a broadcast frame not belonging to the GO terminal, the first analysis component 204 also records the IP address and the MAC address of a terminal in the currently broadcasted group and those of the GO terminal broadcasting the frame.

In the embodiment of the present disclosure, the first analysis component 204 analyzes the frame to obtain the address information of a GC terminal in the same group as said other GO terminal from the acquired broadcast data frame, then the route update component 205 establishes a route relationship with the GC terminal in the same group as said other GO terminal according to the address information of the GC terminal. In this way, by means of an upper-layer protocol, a communication is realized between a GO terminal and a GC terminal belonging to another GO terminal on another network segment, thus facilitating the use of terminals.

In an exemplary embodiment, as the discovery of a specific communicable terminal depends on the discovery of a specific address, the address information mentioned herein includes an MAC address and an IP address.

Preferably, in another embodiment of the terminal provided herein, to facilitate the establishment of a route relationship, the route update component 205 specifically modifies, according to the IP address of said other GO terminal, a gateway address under the P2P0 interface to be the IP address of said other GO terminal and then establishes a route relationship with said other GO terminal.

In the foregoing embodiment, the first acquisition component 200 acquires a broadcast data frame sent from another GO terminal which resides on a link supporting Wi-Fi Direct, the first analysis component 204 analyzes the broadcast data frame sent from said other GO terminal to record the address information of a GC terminal in the currently broadcasted group and those of the GO terminal broadcasting the frame, and the route update component 205 updates, according to the IP address of said other GO terminal recorded by the route update component 205, a route table and modifies a gateway address under the P2P0 interface of the current GO terminal to be the IP address of said other GO terminal to establish a route relationship. A wireless network can be constructed using the recorded IP address of the GO terminal and the established route relationship, and then by means of an upper-layer protocol, GO terminals on different network segments can communicate with each other or with the GC terminals in different groups to which the GO terminals belong.

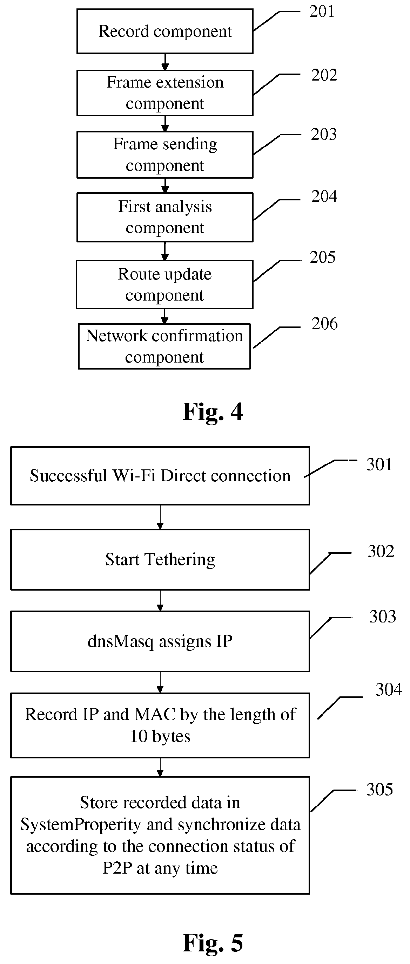

Preferably, in another embodiment of the present disclosure, as a GO terminal sending broadcast data on a link may be in a restarted state or a closed state, as shown in Fig. 4, on the basis of the embodiment shown in Fig. 3, the GO terminal may further include:
a network confirmation component 206 which is configured to, after the route relationship has been established with said other GO terminal, carry out a ping processing for gateways of different network segments of a network, and update a connection/disconnection status of the network. In this embodiment, whether or not the network is available or there is a network failure can be determined through the ping processing.

In the embodiment, after the establishment of a route relationship with said other GO terminal, the network confirmation component 206 carries out a ping processing to continuously confirm whether or not said other GO terminal stops supplying services or starts supplying services so that the user can communicate with the terminals in each started GO terminal group to guarantee the effectiveness of data synchronization.

Preferably, in another embodiment of the terminal disclosed herein, as shown in Fig. 4, the terminal may further include:
a record component 201 which is configured to record an initialization phase of a dynamic host configuration protocol of a GO terminal to be an IP address assigned to a GC terminal in the same group as the GO terminal and an MAC address of the GC terminal;
a frame extension component 202 which is configured to sequentially write the IP address and the MAC address of the GC terminal recorded by the record component into a data area of a frame body of the broadcast data frame and fill an address field of the broadcast data frame with the IP address and the MAC address of the GO terminal to obtain an extended broadcast data frame; and
a frame sending component 203 which is configured to send the extended broadcast data frame.

The record component 201 records an IP address and an MAC address assigned to a GC terminal during the Dynamic Host Configuration Protocol (DHCP) process of GO terminals after the connection of Wi-Fi Direct groups, wherein the IP address is a record of 4 bytes and the MAC address is a record of 6 bytes, thus, the address information of one GC terminal occupies 10 bytes.

The frame extension component 202 constructs a broadcast data frame, the first address field of which is filled with a broadcast address, the second address field of which may be blank, the third address field of which is filled with the MAC address and the IP address of a GO terminal and the frame body of which is sequentially filled with address information of GC terminals constructed by the record component 201, there may be address information of at most 231 GC terminals in this example embodiment.

The frame sending component 203 sends broadcast data frames at regular time which is determined empirically and is set to be 30s here.

In the embodiment of the present disclosure, with the use of Wi-Fi Direct, the record component 201 records an IP address and an MAC address assigned to a GC terminal during the DHCP process of a GO terminal, the frame extension component sequentially writes the IP address and the MAC address of each GC terminal into a frame body, and the IP address and the MAC address of the GO terminal are written into an address field of the broadcast data frame, in this way, the GO terminal extends the broadcast data frame on a link layer, and on the channel the GO terminal resides, the frame sending component sends, at regular time, the broadcast data frame the content of which includes the MAC address and the IP address of the GO terminal and those of each GC terminal. In this way, another GO terminal analyzes the content of the broadcast frame after receiving the broadcast frame to connect different network segments into a network through a route.

Preferably, in another embodiment of the present disclosure, to make the information transferred contain sufficient content and a GO terminal collect information timely, the IP address and the MAC address of the GC terminal are recorded in the extended broadcast data frame using 10 bytes, including 4 bytes of IP address and 6 bytes of MAC address.

Correspondingly, a wireless networking method is provided in another embodiment of the present disclosure which includes:
Step 11: acquiring a broadcast data frame sent from another GO terminal currently residing on a link supporting Wi-Fi Direct, wherein the broadcast data frame carries address information of said other GO terminal;
Step 12: analyzing the broadcast data frame to obtain the address information of said other GO terminal; and
Step 13: establishing a route relationship with said other GO terminal according to the address information of said other GO terminal.

On the basis of the foregoing embodiment, the wireless networking method further may include:
Step 21: carrying the address information of a GC terminal in the same group as said other GO terminal in the broadcast data frame;
Step 22: acquiring, from the broadcast data frame, the address information of the GC terminal in the same group as said other GO terminal; and
Step 23: establishing a route relationship with the GC terminal in the same group as said other GO terminal according to the address information of the GC terminal.

As shown in Fig. 5, the implementation of a record distribution function involved in Step 11 of the foregoing embodiment may include:
Step 301: establishing a Wi-Fi Direct connection successfully; the completion of the creation of a group through the successful establishment of a Wi-Fi Direct connection between terminals is to be guaranteed first;
Step 302: starting Tethering; the terminal serving as a GO terminal starts a DHCP server to start a DHCP process to assign an IP to a GC terminal;
Step 303: completing IP assignment by using a dnsMarsq; each assigned IP is recorded after the IP assignment and prior to the sending of a request ACK to a GC terminal;
Step 304: to guarantee the correspondence relationship between an IP and a terminal, each assigned IP is in a one-to-one correspondence relationship with the MAC address of a terminal, wherein the IP address occupies 4 bytes, the MAC address occupies 6 bytes, and the two addresses are recorded as 10 bytes uniformly; and
Step 305: storing each recorded group consisting of an IP address and an MAC address in SystemProperity, maintaining the data timely according to the connection status of P2P and modifying the IP information and the MAC information contained in the data in synchronization with the joining of a terminal in the group or the exit of a terminal from the group, thereby guaranteeing the effectiveness of data synchronization.

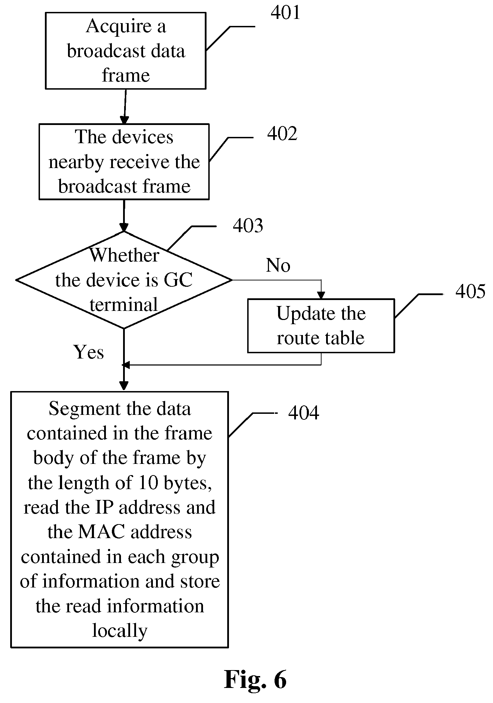

As shown in Fig. 6, the flow of the frame analysis described in Step 12 of the foregoing embodiment may include:
Step 401: acquiring the broadcast data frame;
Step 402: receiving the broadcasted frame by the terminals nearby;
Step 403: determining whether or not the terminal receiving the broadcasted frame is a GC terminal after the broadcast data frame is received;
Step 404: segmenting the data contained in the frame body of the frame by the length of 10 bytes if the terminal receiving the broadcasted frame is a GC terminal, reading the IP address and the MAC address contained in each group of information and storing the read information locally; and
Step 405: updating the route table if the terminal receiving the broadcast frame is not a GC terminal but a GO terminal, and then repeating Step 404.

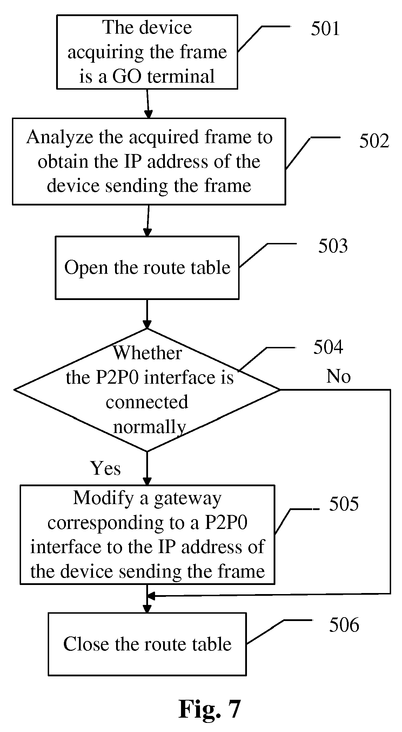

As shown in Fig. 7, the implementation of the route establishment function involved in Step 13 of the foregoing embodiment may include:
Step 501: acquiring, by the GO terminal, the data frame broadcasted from another GO terminal;
Step 502: analyzing the acquired frame to obtain the IP address of the GO terminal sending the frame;
Step 503: opening the route table of the terminal and preparing to carry out a route information update operation;
Step 504: checking, in the route table, whether or not the P2P0 interface is connected normally;
Step 505: if the P2P0 connection is normal, updating the IP address of the gateway recorded in the route table of the GO terminal and generating route information; and
Step 506: completing the operation and closing the route table.

In an exemplary embodiment, after Step 13, the method may further include:
Step 14: carrying out a ping processing for gateways of different network segments of a network after establishing a route relationship, and updating a connection/disconnection status of the network.

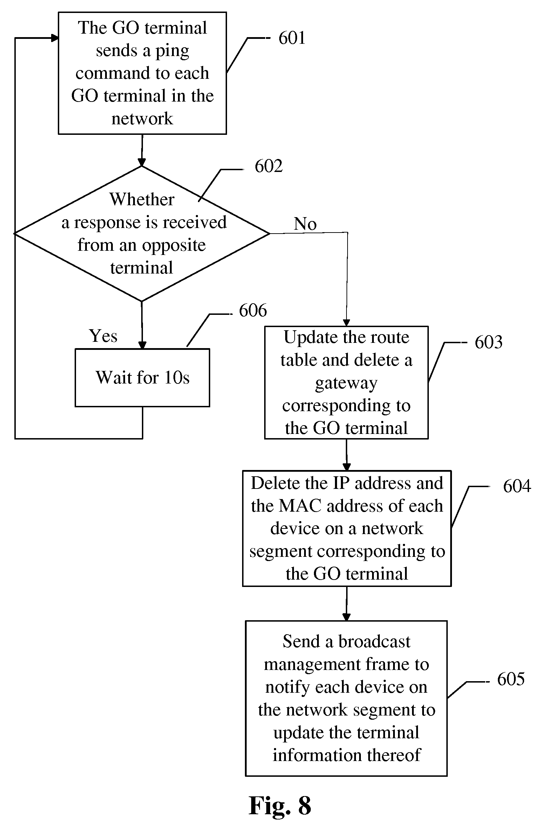

As shown in Fig. 8, the implementation of the network confirmation described in Step 14 of the foregoing embodiment includes:
Step 601: sending, by the GO terminal, a ping command to each GO terminal in the current network and waiting for a response from an opposite terminal;
Step 602: determining, by the current GO terminal, whether or not a response is received from an opposite terminal;
Step 603: if no response is received from an opposite terminal, then determining that a service set has been disconnected, in this case, updating the route table and deleting the gateway under the current P2P0;
Step 604: deleting the IP address and the MAC address of each terminal on a network segment corresponding to a GO terminal making no response;
Step 605: sending a broadcast management frame to notify each terminal on the network segment to update the terminal information thereof, that is, notifying each GC terminal to delete the IP address and the MAC address of a terminal on a corresponding network segment that are stored previously;
Step 606: the GO terminal waiting for 10s and then sending a ping command again.

In an exemplary embodiment, to construct the data frame of a GO terminal, a data frame construction method is also provided, which includes:
Step 31: recording an initialization phase of a dynamic host configuration protocol of a GO terminal to be an IP address assigned to a GC terminal in the same group as the GO terminal and an MAC address of the GC terminal;
Step 32: sequentially writing the IP address and the MAC address of each GC terminal recorded by a record component into a data area of a frame body of a broadcast data frame and filling an address field of the broadcast data frame with the IP address and the MAC address of the GO terminal to obtain an extended broadcast data frame; and
Step 33: sending the extended broadcast data frame.

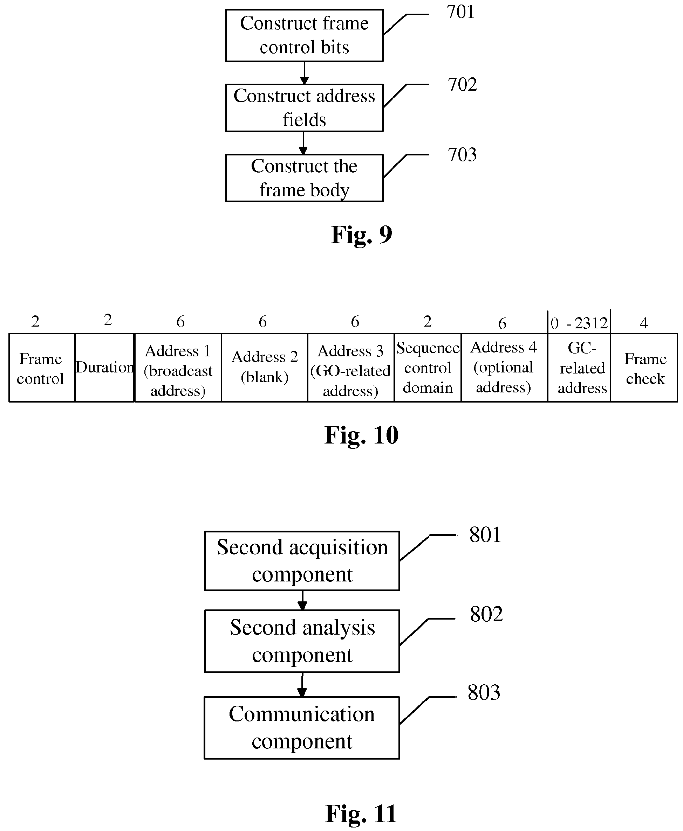

As shown in Fig. 9 and Fig. 10, the implementation of the frame extension described in Step 22 of the foregoing embodiment may include:
constructing a broadcast data frame, writing a broadcast address in the first address field of the broadcast data frame, keeping the second address field of the broadcast data frame unchanged, for example, writing nothing into the second address field, and writing the MAC address and the IP address of the GO terminal in the third address field of the broadcast data frame;
   Step 701: constructing frame control bits, mainly modifying all the 4 bits of the subtype in the frame control bits to be 0 so as to mark the frame as an information frame;
   Step 702: constructing address fields, wherein three address fields are classified according to a protocol standard for data frames, the first one of which is for receiving address, as the data frame mentioned herein is of a broadcast type data frame, the 6 bytes of the address field of the data frame are all written to be FF; and
   Step 703: constructing the frame body of the frame by writing data groups each consisting of a previously encoded IP address and a previously encoded MAC address into the frame body of the frame, as the length of a frame body is 2312 bytes, a GO terminal can support 231 groups of GC terminals.

Preferably, in another embodiment of the present disclosure, as the discovery of a communicable terminal depends on the discovery of a specific address, the address information involved in the wireless networking method provided herein includes an MAC address and an IP address.

Preferably, in another embodiment of the present disclosure, to facilitate the establishment of a route relationship, in wireless networking method provided in an embodiment of the present disclosure, establishing a route relationship with a GC terminal in the same group as another GO terminal according to the address information of the GC terminal includes: modifying, according to the IP address of said other GO terminal, a gateway address under a P2P0 interface to be the IP address of said other GO terminal and establishing a route relationship with said other GO terminal.

Preferably, in another embodiment of the present disclosure, to confirm the status 'on'/'off' of the GO terminal which sends broadcast data on a link, the wireless networking method provided in the embodiment of the present disclosure may further include: carrying out a ping processing for the gateways of different network segments of a network after the establishment of a route relationship, and updating a connection/disconnection status of the network.

In the embodiment of the present disclosure, with the use of Wi-Fi Direct, the IP address and the MAC address assigned to a GC terminal are recorded during the DHCP process of a GO terminal and then orderly written into a frame body, and the IP address and the MAC address of the GO terminal are written into an address field of the broadcast data frame, in this way, the GO terminal extends the broadcast data frame on a link layer, and on the link the GO terminal resides, the broadcast data frame the content of which includes the MAC address and the IP address of the GO terminal and those of the GC terminal is sent at regular time. By analyzing a broadcast type data frame sent from another GO terminal, the IP address and the MAC address of a GC terminal in the currently broadcasted group are recorded, meanwhile, the IP address and the MAC address of the GO terminal broadcasting the frame are also recorded, the route table is updated according to the IP address of said other GO terminal recorded by the current GO terminal to modify the address of a gateway under the P2P0 interface in the current GO terminal to be the IP address of the current GO terminal, thereby establishing a route relationship. By completing wireless networking using the recorded IP addresses of the GO terminals and the established route relationship and updating the connection/disconnection status of a network through a ping processing carried out for gateways of different network segments in the network, the GO terminals on different network segments can communicate with each other and the GC terminals in the different groups of the GO terminals belong by means of an upper-layer protocol. Then, another GO terminal analyzes the content of the broadcast frame after receiving the broadcast frame, in this way, different network segments are connected into a network through a route.

After a route is established between the GO terminals, the GO terminals on different networks can communicate with the GC terminals included in the route table the GO terminals belong to, however, the GC terminals still cannot communicate with each other, thus, a terminal is also provided in an embodiment of the present disclosure which, as shown in Fig. 11, includes:
a second acquisition component 801 which is configured to acquire a broadcast data frame sent from another GO terminal currently residing on a link supporting Wi-Fi Direct, wherein the broadcast data frame carries address information of at least one other GC terminal in the same group as the GO terminal;
a second analysis component 802 which is configured to analyze the broadcast data frame to obtain the address information of the at least one other GC terminal in the currently broadcasted group; and
a communication component 803 which is configured to communicate with the at least one other GC terminal according to the recorded address information of the at least one other GC terminal;

The communication components on the same network segment can directly communicate with each other after acquiring the address information of the opposite terminal.

In the embodiment of the present disclosure, the second analysis component analyzes the broadcast data frame acquired by the second acquisition component so that a GC terminal, belonging to the group or not, records the address information of other terminals in the currently broadcasted group after receiving the broadcast data frame and the GC terminals on the same network segment communicate with each other through the communication component.

Preferably, in the terminal provided in the embodiment of the present disclosure, the address information includes an MAC address and an IP address.

Correspondingly, a communication method is provided in another embodiment of the present disclosure which includes:
Step 31: acquiring a broadcast data frame sent from a GO terminal currently residing on a link supporting Wi-Fi Direct, wherein the broadcast data frame carries address information of at least one other GC terminal in the same group as the GO terminal;
Step 32: analyzing the broadcast data frame to obtain an Internet Protocol (IP) address and a Media Access Control (MAC) address of the at least one other GC terminal in a currently broadcasted group; and
Step 33: communicating with the at least one other GC terminal according to the recorded address information of the at least one other GC terminal.

In the embodiments of the present disclosure, by analyzing an acquired broadcast data frame, a GC terminal, belonging to the current group or not, records the IP address of other terminals in the currently broadcasted group and a corresponding MAC address, thus realizing the intercommunication between GC terminals through a communication component.

Although certain exemplary embodiments of the present disclosure have been described above, it should be appreciated that a variety of modifications and improvements can be devised by those of ordinary skill in the art without departing from the principle of the present disclosure and that the modifications and improvements should fall within the protection scope defined by the claims of the present disclosure.

### Industrial Applicability

As stated above, the terminal and the wireless networking method provided herein have the following beneficial effects: the networking of devices belonging to different groups enables the intercommunication among a plurality of devices on different network segments as well as the communication of GC terminals in the same group, thus facilitating the use of terminals.

## Claims

1. A terminal, comprising:
a first acquisition component which is configured to acquire a broadcast data frame sent from another Group Owner, GO, terminal currently residing on a link supporting Wi-Fi Direct, wherein the broadcast data frame carries address information of said other GO terminal;
a first analysis component which is configured to analyze the broadcast data frame to obtain the address information of said other GO terminal; and
a route update component which is configured to establish a route relationship with said other GO terminal according to the address information of said other GO terminal.

2. The terminal as claimed in claim 1, wherein address information of a Group Client, GC, terminal in a same group as said other GO terminal is also carried in the broadcast data frame;
the first analysis component is also configured to obtain, from the broadcast data frame, the address information of the GC terminal in the same group as said other GO terminal; and
the route update component is also configured to establish a route relationship with the GC terminal in the same group as said other GO terminal according to the address information of the GC terminal in the same group as said other GO terminal.

3. The terminal as claimed in claim 1 or 2, wherein the address information comprises a Media Access Control, MAC, address and an Internet Protocol, IP, address.

4. The terminal as claimed in claim 3, wherein the route update component is configured to modify, according to the IP address of said other GO terminal, a gateway address under a P2P0 interface to be the IP address of said other GO terminal, and establish the route relationship with said other GO terminal.

5. The terminal as claimed in claim 1, further comprising:
a network confirmation component which is configured to, after the route relationship with said other GO terminal has been established, carry out a ping processing for gateways of different network segments of a network, and update a connection/disconnection status of the network.

6. The terminal as claimed in claim 3, further comprising:
a record component which is configured to record an initialization phase of a dynamic host configuration protocol of the GO terminal to be an IP address assigned to a GC terminal in the same group as the GO terminal and an MAC address of the GC terminal;
a frame extension component which is configured to sequentially write the IP address and the MAC address of the GC terminal recorded by the record component into a data area of a frame body of the broadcast data frame and fill an address field of the broadcast data frame with the IP address and the MAC address of the GO terminal to obtain an extended broadcast data frame; and
a frame sending component which is configured to send the extended broadcast data frame.

7. The terminal as claimed in claim 6, wherein the IP address and the MAC address of the GC terminal are recorded in the extended broadcast data frame using 10 bytes, the IP address occupying 4 bytes and the MAC address occupying 6 bytes.

8. A terminal, comprising:
a second acquisition component which is configured to acquire a broadcast data frame sent from a Group Owner, GO, terminal currently residing on a link supporting Wi-Fi Direct, wherein the broadcast data frame carries address information of at least one other Group Client, GC, terminal in a same group as the GO terminal;
a second analysis component which is configured to analyze the broadcast data frame to obtain the address information of the at least one other GC terminal in the currently broadcasted group; and
a communication component which is configured to communicate with the at least one other GC terminal according to the recorded address information of the at least one other GC terminal.

9. The terminal as claimed in claim 8, wherein the address information comprises a Media Access Control, MAC, address and an Internet Protocol, IP, address.

10. A wireless networking method, comprising:
acquiring a broadcast data frame sent from another Group Owner, GO, terminal currently residing on a link supporting Wi-Fi Direct, wherein the broadcast data frame carries address information of said other GO terminal;
analyzing the broadcast data frame to obtain the address information of said other GO terminal; and
establishing a route relationship with said other GO terminal according to the address information of said other GO terminal.

11. The wireless networking method as claimed in claim 10, wherein address information of a Group Client, GC, terminal in a same group as said other GO terminal is also carried in the broadcast data frame;
the address information of the GC terminal in the same group as said other GO terminal is acquired from the broadcast data frame; and
a route relationship with the GC terminal in the same group as said other GO terminal is established according to the address information of the GC terminal in the same group as said other GO terminal.

12. The wireless networking method as claimed in claim 11, wherein the address information comprises a Media Access Control, MAC, address and an Internet Protocol, IP, address.

13. The wireless networking method as claimed in claim 12, wherein establishing the route relationship with the GC terminal in the same group as said other GO terminal according to the address information of the GC terminal comprises:
modifying, according to the IP address of said other GO terminal, a gateway address under a P2P0 interface to be the IP address of said other GO terminal and establishing the route relationship with said other GO terminal.

14. The wireless networking method as claimed in claim 11, further comprising: carrying out a ping processing for gateways of different network segments of a network after the route relationship has been established, and updating a connection/disconnection status of the network.

15. A data frame construction method, comprising:
recording an initialization phase of a dynamic host configuration protocol of a Group Owner, GO, terminal to be an Internet Protocol, IP, address assigned to a Group Client, GC, terminal in a same group as the GO terminal and a Media Access Control, MAC, address of the GC terminal;
writing the IP address and the MAC address of the GC terminal recorded by a record component into a data area of a frame body of a broadcast data frame and filling an address field of the broadcast data frame with the IP address and the MAC address of the GO terminal to obtain an extended broadcast data frame; and
sending the extended broadcast data frame.

16. A communication method, comprising:
acquiring a broadcast data frame sent from a Group Owner, GO, terminal currently residing on a link supporting Wi-Fi Direct, wherein the broadcast data frame carries address information of a Group Client, GC, terminal in a same group as the GO terminal;
analyzing the broadcast data frame to obtain an Internet Protocol, IP, address and a Media Access Control, MAC, address of at least one other Group Client, GC, terminal in a currently broadcasted group; and
communicating with the at least one other GC terminal according to the recorded address information of the at least one other GC terminal.
